(19) Europäisches Patentamt
European Patent Office
Office européen des brevets

(11) **EP 3 462 646 A1**

(12) **EUROPEAN PATENT APPLICATION**

(43) Date of publication:
03.04.2019 Bulletin 2019/14

(51) Int Cl.:
*H04B 17/318* (2015.01)     *H04B 17/309* (2015.01)
*B64C 39/02* (2006.01)

(21) Application number: 17193564.6

(22) Date of filing: 27.09.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fraunhofer-Gesellschaft zur Förderung der angewandten Forschung e.V.**
**80686 München (DE)**

(72) Inventors:
• **THOMAS, Robin Rajan**
**10781 Berlin (DE)**

• **HEYN, Thomas**
**90766 Fürth (DE)**
• **ROTH-MANDUTZ, Elke**
**90419 Nürnberg (DE)**
• **FEHRENBACH, Thomas**
**10711 Berlin (DE)**

(74) Representative: **Schenk, Markus et al**
**Schoppe, Zimmermann, Stöckeler Zinkler, Schenk & Partner mbB Patentanwälte**
**Radlkoferstrasse 2**
**81373 München (DE)**

(54) **WIRELESS NETWORK HANDLING FLYING UES**

(57)     A wireless network comprises a plurality of base stations configured for operating the wireless network, a user equipment configured for communicating with at least one of the plurality of base stations, a categorizer configured for providing a categorizing information categorizing the UE as airworthy UE based on a measurement of a signal characteristic between the UE and the plurality of base stations and comprises a controller for controlling at least one of the plurality of base stations or the user equipment dependent on the categorizing information.

Fig. 3

EP 3 462 646 A1

**Description**

The present invention relates to a wireless network, to a base station and to a user equipment. The invention further relates to interference mitigation of aerial platforms.

Unmanned aerial vehicles (UAV), also referred to as drones, capable of communicating using LTE (long term evolution) and possibly New Radio (airborne user equipments (UEs)) are under discussion for standardization by 3GPP. UAVs such as drones present an increasing list of expanded use case scenarios from package delivery, emergency relief services to wildlife conservation. Therefore, enhancements have to be made to existing LTE/New Radio networks to prepare for the additional network traffic and associated issues introduced by airborne UEs like interference. However, airborne UEs experience different radio channel propagation characteristics, when compared to terrestrial UEs and this presents its own set of constraints on the network performance. Interference introduced by airborne UEs is seen as a key problem [1,2], which negatively effects the performance of the overall network, which will be further aggravated by uncertified drones such as drones carrying standard LTE UEs, see [3].

The management of interference as a result of airborne UEs can be handled in a variety of ways ranging from eNB (evolved Node B; base station) resource scheduling of airborne UEs and terrestrial UEs, to enable interference mitigation/cancellation using interference knowledge sharing among neighboring eNBs. Interference cancellation strategies are usually exploited with one or two dominant interferers which will be challenging if there are multiple airborne UEs deployed in an LTE network. Additionally, an extended set of cells has been considered for joint CoMP (coordinated multipoint) with coherent combining to handle uplink interference caused by airborne UEs. An enhanced mechanism to report RSRP (reference signals received power)/RSRQ (reference signals receive quality)/CSI-RSRP (channel state information-reference signals received power) measurements for an enhanced number of cells has also been examined for airborne UEs in order to perform interference detection, see [4]. Power control strategies, especially on the uplink can also be used to control the interference caused by airborne UEs, see open [5]. Uplink power control mechanisms including open, i.e., without feedback and closed loop, i.e., with feedback control strategies have already been specified in [6]. Limiting the maximum transmit power based upon a given power path loss threshold has also been suggested, in addition to designing UE-specific open loop TPC (transmit power control) parameters, see [7].

Methods for Maximum Power Reduction (MPR) and Additional Maximum Power Reduction (A-MPR) are defined in [8]. MPR is a reduction of the uplink transmit power of a UE for higher order modulation, signaled by the network to the UE. A-MPR is the additional reduction of the output power for specific network deployment scenarios, where interference from one network to another network is likely, e.g., two networks operating in adjacent frequency bands.

The Radio Frequency (RF) scenarios as specified in [9] currently only caters for most cases involving terrestrial UEs, which are assumed to be below the base station height (with the exception of UEs being quasi-static in high rise buildings in which the UEs height above ground may be greater than the base station's height). In the case of drone scenarios, these airborne UEs will experience a strong line-of-sight (LoS) component due to unobstructed signal transmissions/receptions. Furthermore, the peak heights at which these drones would operate will be greater than the average base station antenna height such as 400m [1] and 120m [2].

Following the discussions in the RAN1 #90 meeting and based on a few technical contributions such as [10], a number of techniques have been suggested in order to assist the network to identify airborne UE devices that are not reported and therefore deemed to be uncertified for operation. These include:

- Provision of a motion vector signature (including 2D/3D position, velocity vectors) that can characterize and differentiate a mobile terminal on board of a drone from terrestrial UEs. These parameters may include vertical/horizontal velocity, barometric pressure, IMU (inertial measurement unit) measurements, as part of the initial access, which can be part of the location reporting to the base station and network;

- Airborne UEs signal to the communication network their special type of UE via a flag, i.e., *isAerialVehicle,* see [10] or *DroneUE,* see [11];

- The onboard GNSS (global navigation satellite system) receiver, which is embedded on most UEs can track the height of the UAV using 3D trilateration. The 3D position coordinates of the airborne UEs are not sufficient enough to characterize an airborne UE due to similar 3D position coordinate features with terrestrial UEs located in high-rise buildings with multiple floors. Reporting the airborne UEs vertical velocity or continuously the vertical position to the eNB will provide a key distinguishing feature to that of the quasi-static terrestrial UEs;

- In addition, most UEs are equipped with an inertial measurement unit comprising an accelerometer and gyroscope, which can be used to detect the rate of change of altitude of a drone by computing and reporting the drone's vertical acceleration, which can assist the network to differentiate the terrestrial UEs;

- An additional positioning method has been supported in the specification [12] using the barometric pressure sensor output if supported by the airborne UE, which can also be used to detect the rate of change of altitude of an airborne UE through changes of the pressure measurement at various altitudes.

The UE can take advantage of the measurement gap period to convey the position assisted information mentioned above to the eNB, enabling the network to identify the airborne UEs and its position. Furthermore, the rate of change of altitude and importantly, the subsequent maintenance of a certain altitude are key distinguishing features between airborne UEs and terrestrial UEs.

However, solutions known only provide for an indicator if the UE is flying and are therefore imprecise.

Thus, there is a need for concepts allowing for a precise reduction of possible interference caused by airborne UEs.

It is an object of the present invention to reduce the interference caused by airborne UEs. This object is achieved by a wireless network, a base station and a user equipment according to the independent claims.

The inventors have found that aerial vehicle UEs that fly may be discriminated from terrestrial UEs based on a signal characteristic. Signal characteristics between the UE and a base station may vary dependent on whether the UE is in flight mode or in terrestrial mode. Such information may further be used to control a minimum transmission power of a UE such that the UE when having a line-of-sight path to a plurality of base stations due to the height achieved by flying reduces interference through the line-of-sight paths based on the varied minimum transmission power.

According to an embodiment, a wireless network comprises a plurality of base stations configured for operating the wireless network. The wireless network further comprises a user equipment configured for communicating with at least one of the plurality of base stations and comprises a categorizer configured for providing a categorizing information categorizing the UE as airworthy UE based on a measurement of a signal characteristic between the UE and the plurality of base stations. The wireless network further comprises a controller for controlling at least one of the plurality of base stations for the UE dependent on the categorizing information. This allows for controlling the UE based on the signal characteristic between the UE and the plurality of base stations and therefore based on a precise parameter indicating a possible occurrence of interference.

According to an embodiment, the categorizer and the controller are part of a base station of the plurality of base stations. Although the categorizer and/or the controller may also be located at different entities of the network and/or may be dedicated entities of the network, a combination of the controller and the categorizer where the base station allows for a low backhaul traffic, especially when having a high number of user equipments in the network.

According to an embodiment, the categorizer is configured for categorizing the UE as an airworthy UE being a flying UE, i.e., as a UE currently flying, based on a variation within a plurality of measurement values of the signal characteristic indicating a signal quality between the UE and at least a subset of the plurality of base stations and/or based on a number of base stations to which the UE has a signal quality of at least a signal quality threshold level. Based on the measurement values and/or based on a number of base stations to which the UE has a signal quality of at least the signal quality threshold level, e.g., a line-of-sight connection, a determination if the UE is flying or not may be obtained. In case of increasing height of the UE, the number of base stations to which a good signal characteristic and/or a line-of-sight path may be obtained, may increase. Therefore, the variation between the measurement values and/or the number of base stations to which a good channel is present may indicate a flight of the UE.

According to an embodiment, the UE is configured for transmitting a Neighbor Cell List to at least one receiving base station of the plurality of base stations. The categorizer is configured for categorizing the UE as airworthy UE being a flying UE when based on a number of base stations operating a corresponding number of neighboring cells of the UE. I.e., the number of base stations listed in the Neighbor Cell List may indicate if the UE is flying or not. This allows for a simple and precise indicator.

According to an embodiment, the signal characteristic is one of a Line of Sight characteristic between the UE and the plurality of base stations, a Received Signal Strength Indication determined at the UE, a Received Signals Received Power determined at the UE and a value derived thereof such as a Received Signal Receive Quality. This allows for using a signal characteristic that is determined at the UE and that may indicate if the UE interferes with the neighboring cells or is at least capable of interfering with those cells.

According to an embodiment, the categorizer is configured for providing the categorizing information so as to categorize the UE as flying UE, wherein the controller is configured to control the UE so as to perform interference mitigation with respect to base stations of the plurality of base stations being outside a cell of the wireless network in which the UE is located, or so as to restrict communication of the UE. This allows for reducing or even preventing interference of UE such as uncertified UE with respect to the neighboring cells.

According to an embodiment, the categorizer is configured for providing the categorizing information so as to indicate if the UE is in a flight mode and is further configured to communicate according to a communication's standard supporting a flight mode, wherein the controller is configured for excluding the EU from communication at least as long as the UE is in flight mode. This allows for maintaining both, the flight mode of the UE and the communication of the rest of the network based on the exclusion of the UE from communication.

According to an embodiment, the categorizer is configured for providing the categorizing information so as to categorize the UE as an airworthy UE being at least one of

- A certified air vehicle, certified to perform aerial communications implemented in the wireless communication network, the air vehicle being the UE;
- An air vehicle uncertified with respect to the aerial communications, the air vehicle being the UE;
- A UE certified with respect to the aerial communications, the UE moving according to a flying apparatus, i.e., a UE attached to a drone or the like;
- And a UE uncertified with respect to the aerial communications, the UE moving according to a flying apparatus.

The controller is configured for at least limiting the communication of the air vehicle and the UE being uncertified with respect to the communication standard and/or to control the air vehicle uncertified with respect to the communication standard so as to perform interference mitigation. This allows for identifying those UEs that are either uncertified or incapable of communicating in the air so as to avoid or at least reduce interference to neighboring cells and to handle those identified UE separately while leaving UE being certified to the flight mode in view of the communication standard may maintain their communication in the air.

According to an embodiment, the categorizer is configured for repeatedly categorizing the UE to repeatedly provide the categorizing information. The controller is configured for time varyingly controlling the UE based on a varying categorizing information. This allows for stopping limitation or blocking of communication when the UE has become a terrestrial UE again, i.e., it has landed. In this case, the UE shows its expected signal characteristics, i.e., paths to neighboring cells are probably obstructed in a higher number. According to an embodiment, the controller is configured for reducing a minimum transmission power of the UE dependent on the categorizing information. This allows to reduce the interference of the UE caused to neighboring cells, e.g., when being in flight mode and having a good channel to neighboring base stations that were obstructed or blocked during a time being a terrestrial UE or being on the ground. Thus, by reducing the minimum transmission power of the UE when being in the air and when having a good channel to a lot of base stations, then the interference caused to such neighboring cells may be reduced.

According to an embodiment, a base station is configured for operating a wireless cell of a wireless communication network. The base station comprises a wireless interface for communicating with a user equipment, a categorizer configured for providing a categorizing information categorizing the UE as airworthy UE based on a measurement of a signal characteristic between the UE and a plurality of base stations, and comprises a controller for controlling the UE dependent on the categorizing information. This allows for operating the wireless communications network cell efficiently.

According to an embodiment, a base station is configured for operating a wireless cell of a wireless communication network. The base station comprises a controller configured for controlling an associated user equipment so as to vary its minimum transmission power. This allows for even further reducing interference caused to other cells when the maximum transmission power has been limited or reduced to a minimum value.

According to an embodiment, the controller is configured for controlling the minimum transmission power used for association of the UE with the base station and/or for controlling the minimum transmission power used for transmitting user data. This allows for obtaining an interference level according to the control data during association and/or during transmission of user data.

According to an embodiment, the controller is configured for providing a controlling information comprising at least one of an interference threshold parameter indicating an amount of power by which the transmission power of the UE has to remain below a predefined minimum transmission power in the network; a power information indicating a minimum transmission power to be used by the UE; and a power reduction information indicating a minimum power and a maximum power between which the UE selects its transmission power. The base station is configured for transmitting the controlling information to the UE. This allows for controlling the UE according to the base station's information.

According to an embodiment, a user equipment is configured for operating in a wireless network. The user equipment comprises a power adjuster configured for adjusting a minimum transmission power indicating a lowest power value for wirelessly transmitting a signal dependent on a received controlling information.

According to an embodiment, a wireless network comprises at least one base station configured for operating a cell of the wireless network and a user equipment configured for communicating with the base station. The wireless network comprises a categorizer configured for providing a categorizing information categorizing the UE as airworthy UE based on a measurement of a signal characteristic between the UE and the base station. The wireless network comprises a controller configured for controlling the network so as to restrict communication of the UE dependent on the categorizing information.

According to an embodiment, the categorizer is configured for repeatedly categorizing the UE to repeatedly provide the categorizing information, wherein the controller is configured for time variantly restricting the communication of the UE (12) based on a varying categorizing information.

For a more complete understanding of the present disclosure, and the advantages thereof, reference is now made to the following description taking in conjunction with the accompanying drawings, in which:

Fig. 1    shows schematic block diagram for illustrating the challenges posed by uncertified drone identification;

Fig. 2     shows a schematic block diagram for illustrating an LTE drone interference scenario in today's mobile networks;

Fig. 3     shows a schematic block diagram of a wireless network according to an embodiment;

Fig. 4a    shows a schematic side view of a wireless network according to an embodiment in an urban environment having a drone on the ground;

Fig. 4b    shows a schematic block diagram of the network of Fig. 4a in which the drone has lifted off;

Fig. 5     shows a schematic table illustrating an example measurement information according to an embodiment;

Fig. 6a    shows a schematic block diagram of a drone according to an embodiment including a communication module;

Fig. 6b    shows a schematic block diagram of a drone according to an embodiment having an interface for connecting with a user equipment;

Fig. 7     shows a schematic graph showing different configurations of a user equipment according to an embodiment;

Fig. 8     shows a schematic block diagram of a user equipment according to an embodiment;

Fig. 9     shows a schematic block diagram of a base station according to an embodiment; and

Fig. 10    shows a schematic block diagram of a further base station according to a further embodiment.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

The embodiments described herein allow for a determination of a UE being a flying UE or an airworthy UE, i.e., capable of flying, and to concepts of reducing interference caused by flying UEs in connection with a wireless network being operated in an infrastructure mode, i.e., a UE obtains downlink data from the base station and transmits uplink information to the base station. The embodiments also relate to a device-to-device communication (D2D). For example, in LTE, a D2D communication is also managed by the base station allowing the devices to use specific resources for their D2D communication. This may require communication between the respective devices and the base station and may therefore allow for identifying the UE and/or for controlling the behavior of the UE in the respective communication mode. Alternatively, the D2D communications can also be autonomously initiated by the UE itself, for example, when the UE is out-of-coverage of a base station.

Some embodiments described herein relate to drones, i.e., unmanned air vehicles carrying a user equipment as an integral part thereof or as a device connectable and/or removable from the air vehicle. The description provided in connection with drones relates without limitation to airborne UEs.

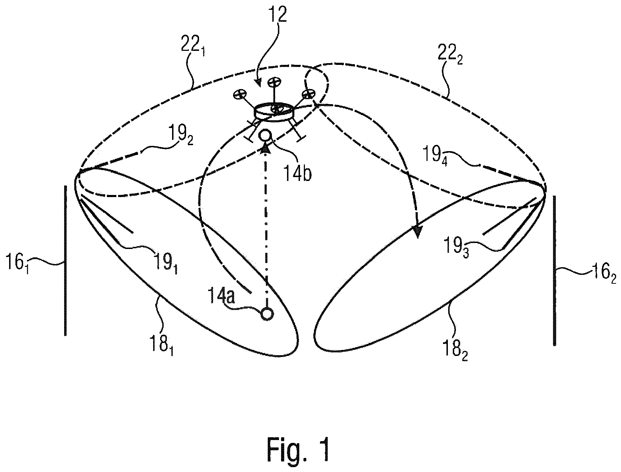

Fig. 1 is a schematic block diagram for illustrating the challenges posed by uncertified drone identification, where an airborne UE 12 such as a drone may transmit from a terrestrial state, i.e., on the ground, at a position 14a to a flying or aerial state at a position 14b being elevated when compared to the position 14a. Thereby, a high number of LoS components may occur and may require that the UE has a higher neighbor cell list when compared to present UEs being limited to a neighbor cell list size having a limit of 8 entries for measurement reporting to the eNB $16_1$ as described in [12, p.566]. According to [12], the number of neighbor cells (measResultNeighCells) included in the (common) measurement report are

- Limited to six intra-frequency neighbors
- Limited to three inter-frequency neighbors
- Assorted by decreasing ranking criterion.

Those neighbors have to exceed a set of thresholds to be included in the measurement report.

As illustrated in Fig. 1, base station $16_1$ and $16_2$ may be configured for operating UEs in terrestrial communication areas $18_1$ and $18_2$. Based on directions $19_1$ to $19_4$ along which the base stations $16_1$ and $16_2$ may radiate their respective radio signals, the base stations $16_1$ and $16_2$ may also be configured for operating UEs in aerial communication areas $22_1$, $22_2$ respectively. Thereby, by transiting from the terrestrial communication area $18_1$ comprising the position 14a to position 14b being in the aerial communication area $22_1$, the UE12, e.g., a drone, may be able to communicate to additional and/or different base stations and therefore may cause interference for communication scheduled or organized by the

base station $16_2$.

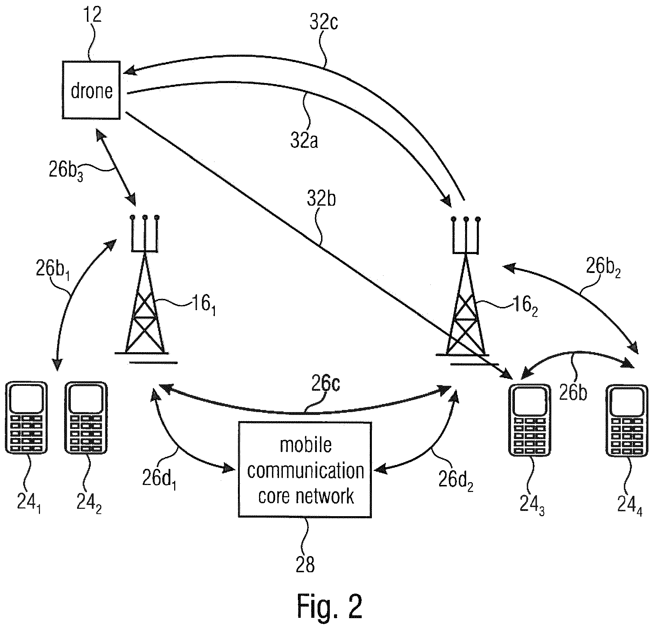

Fig. 2 shows a schematic block diagram for illustrating an LTE drone interference scenario in today's mobile networks, i.e., Fig. 2 represents the possible interference issues involving airborne UEs in existing LTE mobile networks. UEs $24_1$ to $24_4$ communicating with their respective base station $16_1$, $16_2$ respectively, may perform regular wireless communication. UEs $24_1$ and $24_2$ may be operated by base station $16_1$ and wirelessly communicate with the base station $16_1$. The UEs $24_3$ and $24_4$ may be associated with the base stations $16_2$ and may wirelessly communicate with the base station $16_2$. Alternatively or in addition, the UEs may communicate directly with each other, for example, the UEs $24_3$ and $24_4$ being within a same network cell, i.e., UEs may maintain a sidelink wireless communication link 26a wherein other UEs may communicate wirelessly with the base station by maintaining communication links $26b_1$, $26b_2$ respectively. The base stations $16_1$ and $16_2$ may communicate with each other, for example, directly via a direct communication link 26c being, for example, using an LTE X2 interface. Alternatively or in addition, the base station $16_1$ and $16_2$ may communicate with each other via a mobile communication core network 28, wherein each of the base stations $16_1$ and $16_2$ may be connected to the mobile communication core network 28 via a respective communication link $26d_1$, $26d_2$ respectively using, for example, a LTE S1 interface.

The base station $16_1$ may be a serving base station to which the drone 12 is associated, i.e., between the drone 12 and the base stations $16_1$ may be maintained a wireless communication link $26b_3$. Based thereon and based on the drone 12 flying above the base station $16_1$ and $16_2$ there may occur a line-of-sight connection not only to the base station $16_1$ but also to further base stations such as the base station $16_2$. Whilst the base station $16_1$ may handle the wireless activity of the drone 12 by scheduling respective resources to the total amount of users such as the UEs $24_1$, $24_2$ and the drone 12, other network cells such as the one operated by the base station $16_2$ may operate without considering the drone 12. With respect to the cell operated by the base station $16_2$, a wireless communication therein may be interfered. For example, a wireless activity of the drone 12 may lead to an interference 32a of a communication link $26b_2$ (uplink) of the base station $16_2$, i.e., with respect to signals being received by the base station $16_2$ by devices associated therewith. Alternatively or in addition, the wireless activity of the drone 12 may lead to an interference 32b of the sidelink communication 26b of devices within the cell of the base station $16_2$. Alternatively, or in addition, a wireless activity of the base station $16_2$, and/or of devices associated therewith may lead to an interference 32c of a downlink of the drone 12, for example, using the wireless communication link $26b_3$.

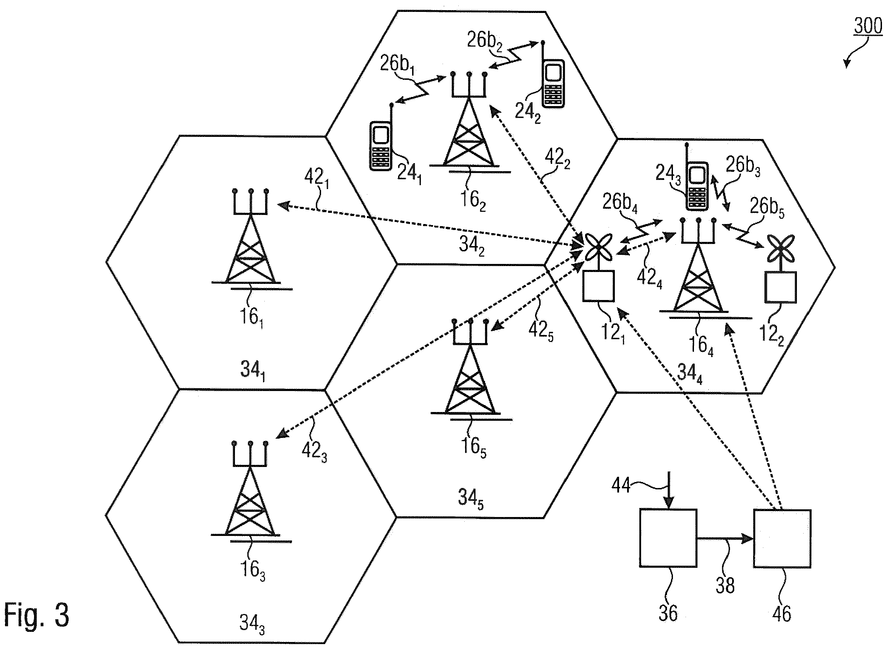

Fig. 3 shows a schematic block diagram of a wireless network 300 according to an embodiment. The wireless network 300 comprises a plurality of base sta-

tions $16_1$ to $16_5$ configured for operating the wireless network 300. For example, each of the base stations $16_1$ to $16_5$ may be configured for operating a wireless network cell $34_1$ to $34_5$ of the wireless network 300. A number of base stations 16 and/or a number of cells may be arbitrary and may be, for example, at least 2, at least 3, at least 5, at least 50, at least 100 or even more. Each of these cells 34 may be operated by at least one base station 16. Within a cell, devices may be associated with a respective base station so as to allow for wireless communication with other devices using a sidelink being managed by the respective base station and/or communicating with the base station. For example, in the wireless communication network cell $34_2$ operated by the base station $16_2$, the UEs $24_1$ and $24_2$ may each maintain a wireless communication link $26b_1$, $26b_2$ respectively with the base station $16_2$. Accordingly, in the wireless communication network cell $34_4$ a UE $24_3$ may be associated with the base station $16_4$ and may maintain a wireless communication link $26b_3$ with the base station $16_4$. The network comprises at least one user equipment configured for communicating with at least one of the plurality of base stations $16_1$ and $16_5$. The at least one user equipment may be one of the mentioned user equipments $24_1$ to $24_3$ but may also be an airworthy UE such as a drone or an unmanned aerial vehicle or a different apparatus configured for flying, for example, using a direct wireless communication such as a remote control on an infrared basis to which a UE, such as the UE $24_1$ to $24_3$ is mounted. By way of a non-limiting example, two drones $12_1$ and $12_2$ may be present in the wireless communication network cell $34_4$ and may be associated with the base stations $16_4$ and may maintain wireless communication links $26b_4$ and $26b_5$ with the base station $16_4$.

The wireless network 300 comprises a categorizer 36 configured for providing a categorizing information 38 categorizing the at least one UE as an airworthy UE. Alternatively, the categorizing information may also categorize a UE as being unable to fly or as being at least on the ground. The categorizer may check or determine, i.e., categorize, if the identified user equipment is known so as to be certified or not. A certified drone may be allowed to communicate, wherein uncertified UEs, i.e., known as being uncertified or unknown with respect to certification, may be handled, e.g., by reducing interference and/or by restricting or blocking communication. When compared to MPR and A-MPR, both methods only limit the maximum output power, not the minimum transmit power level. Same is currently the case for D2D communication LTE, where the maximum output levels are defined for sidelink/PC5 D2D communication, see [12]. Embodiments may be used in the field of drones, planes having UEs or a UE to network relate type UE on board to connect to the network. The embodiments described herein further relate to an interference management. The categorizer is configured for using information related to a measurement of a signal characteristic between the UE and base stations for the categorization. For example, the signal characteristic may be or may relate to a Line of Sight characteristic between the UE 12 and the plurality of base stations $16_1$ to $16_5$, a Received Signal Strength Indication (RSSI) determined at the UE 12, a Reference Signals Received Power (RSRP) determined at the UE 12 and/or a value derived thereof such as Reference Signal Received Quality (RSRQ) or a path loss information based on a respective computation. The Line of Sight criteria may relate to signal quality or a channel quality being at least or above a threshold value. I.e., a signal quality of a channel comprising at least a signal quality threshold level may be considered as a LoS criteria. It may be characterized by a strong received signal power. Mathematically, this may follow a Rician Fading distribution with a specific K-factor (K > 0). The signal quality threshold level may vary, e.g., dependent on the signal environment. A low complex approach may use existing signal metrics for surrounding neighboring cells to determine the threshold, for example, by averaging the received signal metrics.

Although being associated with the base station $16_4$, the UE/drone $12_1$ may receive signals from one or more of the base stations $16_1$, $16_2$, $16_3$ or $16_5$ and/or may be received by those base stations when transmitting a signal. I.e., although being attenuated, there may exist a channel $42_1$, $42_2$, $42_3$ and/or $42_5$ by the channel $42_4$ to the serving base station $16_4$. When the attenuation becomes too high, the signals may be attenuated at that height that the respective signals from the base station, e.g., the base station $16_3$ is regarding as noise at the drone $12_1$ and vice versa. I.e., a real channel suited for transmitting signals may depend on a signal quality, wherein for the sake of description, a channel 42 may be present between the drone 12 and the base station $16_1$ to $16_5$ as long as signal power transmitted from one of the nodes forming the respective channel 42 transmit a signal with a signal power being high enough to interfere at the other end of the channel 42.

Using signal characteristics that may allow to quantify the respective channel 42 may be determined within the network 300, for example, by the drone $12_1$ and/or each of the base stations $16_1$ to $16_5$. The categorizer 36 may receive a measurement information 44 containing information indicating the measurement result of at least some of the channels 42 and therefore between the UE and the plurality of base stations $16_1$ to $16_5$. In particular, the absence of specific information in connection with one or more of the base stations $16_1$ to $16_3$ may also be regarded as an information, for example, as having a signal characteristic being above or below a threshold value. For example, the attenuation may be above a certain threshold value and/or the signal quality may be below a certain threshold value.

The categorizer 36 may be configured for providing the categorizing information 38 to a controller 46, for example, using a wired or wireless interface. The controller 46 may be configured for controlling at least one of the plurality of base stations $16_1$ to $16_5$ of the user

equipment $12_1$ i.e., the categorized drone, dependent on the categorizing information 38. The categorizing information 38 categorizing the UE $12_1$ as airworthy UE may be understood as that the categorizing information 38 may indicate, if the drone $12_1$ is capable of flying or not and/or is flying or not. The categorizing information 38 may be, for example, a binary information, indicating, if the drone $12_1$ is airworthy or not. Alternatively or in addition, additional information may be generated and/or transmitted with the categorizing information 38, for example, information in connection with the flight of the drone $12_1$ such a height, a velocity, a direction or the like. The controller 46 may control the base station $16_4$ or a different base station, for example, so as to exclude the drone $12_1$ from communication within the cell $34_4$, for including the drone $12_1$ into communication, for example, when having landed again and/or so as to instruct the base station $16_4$ for performing specific actions in order to reduce the interference caused by the drone $12_1$ when flying. Alternatively or in addition, the controller 46 may be configured for controlling the drone $12_1$, for example, by controlling the drone $12_1$ so as to adapt a transmission power and/or to use only specific services within the cell $34_4$ in order perform a low amount of communication and/or in order to exclude the drone $12_1$ from communication at least as long as flying or having information about a requirement that interference of the drone $12_1$ to other cells has to be kept low.

The measurement information 44 may be received, for example, from the drone $12_1$ and/or from the base station $16_4$ having information about the signal characteristics between the drone $12_1$ and other base stations $16_1$ to $16_5$. By non-limiting example only, the measurement information 44 may be a Neighbor Cell List transmitted from the drone $12_1$ to the base station $16_4$ and forwarded directly or indirectly to the controller 36 and/or transmitted from drone $12_1$ to the controller 36. The neighboring cell list may indicate to which base stations $16_1$ to $16_5$ the drone $12_1$ has a good communication link, for example, a line-of-sight path. The categorizer 36 may be configured for categorizing the UE as airworthy UE being a flying UE based on a number of base stations operating a corresponding number of neighboring cells of the UE, i.e., based on a number of entries in the neighbor cell list being present and/or comprising a signal characteristic being above a threshold value.

Although being illustrated as being separated from the base station $16_4$, the categorizer 36 and/or the controller 46 may be arranged at the base station $16_4$ or may even be a part thereof. I.e., the base station $16_4$ may comprise the categorizer 36 and/or the controller 46. Alternatively or in addition, other base stations $16_1$ to $16_3$ or $16_5$ may comprise the controller 36 and/or the controller 46 and/or further categorizers and/or further controllers. I.e., each of the base stations $16_1$ to $16_5$ may comprise a respective categorizer and respective controller.

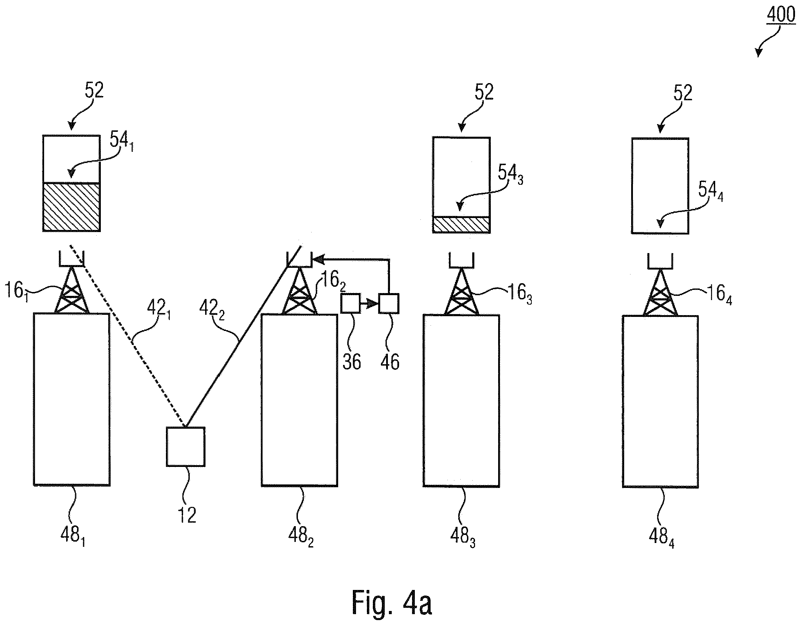

Fig. 4a shows a schematic side view of a wireless network 400 according to an embodiment. By way of example, the base stations $16_1$ to $16_4$ are arranged on top of buildings $48_1$ to $48_4$. The drone 12 is on the ground, i.e., it operates according to a terrestrial UE. The drone 12 may be associated with the base station $16_2$ and may comprise a LoS path to the base station $16_2$, wherein this LoS path is not necessary. When communicating with the base station $16_2$, neighboring base stations may receive interfering power. By way of example, the drone 12 transmits a transmitted power 52 when transmitting a signal. A portion thereof arriving at base stations $16_1$, $16_3$ and/or $16_4$ may be referred to as interfering power $54_1$, $54_3$, $54_4$ respectively. For example, the closer the distance and the lower the attenuation between the drone 12 and the respective base stations $16_1$, $16_3$ and $16_4$, the higher the interfering power $54_1$.

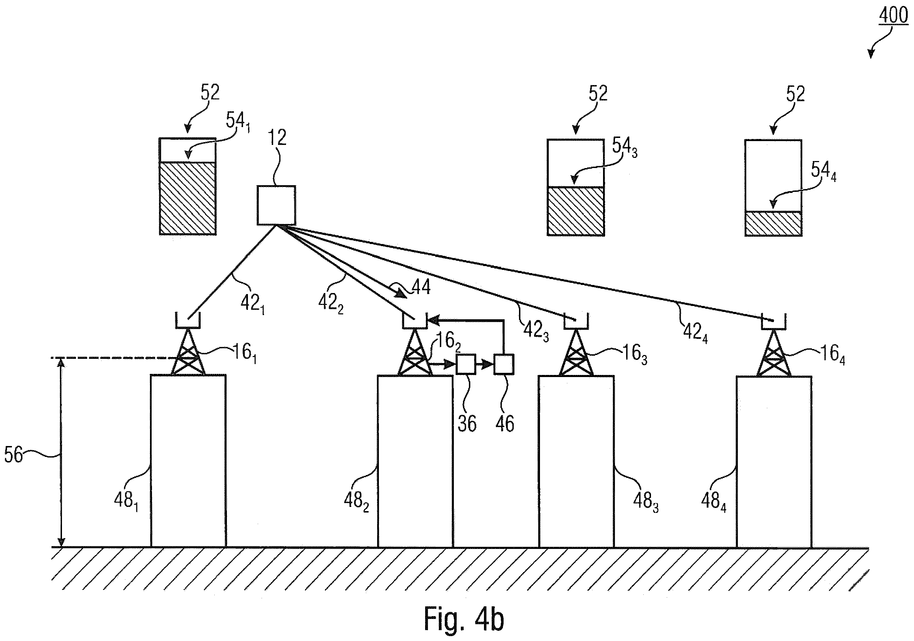

Fig. 4b shows a schematic block diagram of the network 400 in which the drone 12 has lifted off, i.e., is an aerial vehicle. Thereby, communication links $42_1$ to $42_4$ may comprise a significantly higher quality, for example, leading to an interfering power $54_1$ to $54_4$ being higher when compared to the scenario of Fig. 4a. By way of example, the communication links $42_1$ to $42_4$ may be obstructed in a lower amount or may even comprise a LoS path. A flying UE may face a LoS path to a base station but is not required to do so. The controller 46 may control the base station $16_2$ and/or the drone 12 so as to cause a low amount of interference to cells operated by the base stations $16_1$, $16_3$ and/or $16_4$.

Above a height threshold value 56, the drone 12 may report the measurement information 44 so as to indicate a high number of base stations $16_1$ to $16_4$ to which it may communicate. Alternatively, the drone 12 may also include the height in its measurement information 44 such that the categorizer 36 may evaluate the drone 12 or may categorize the drone 12 using the height information.

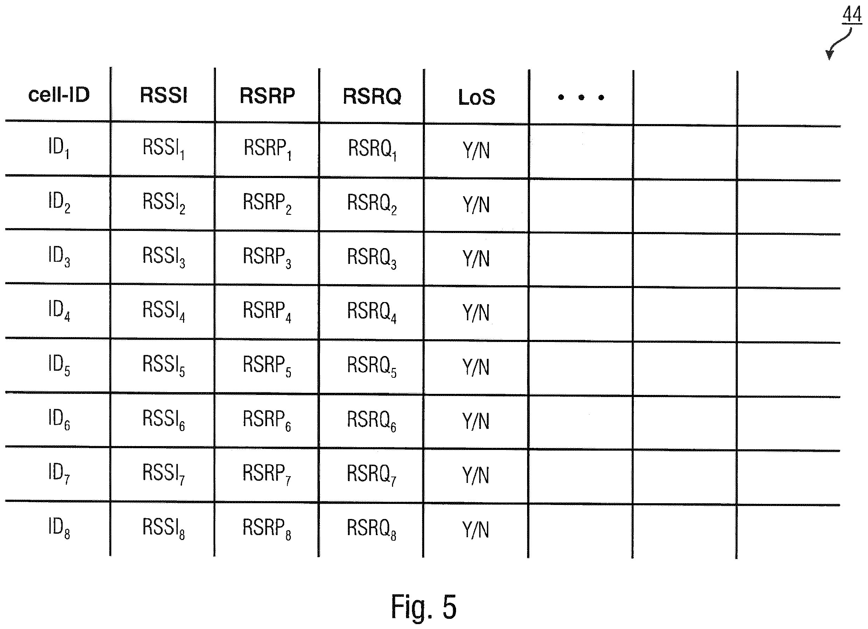

Fig. 5 shows a schematic table illustrating an example measurement information 44 provided by a drone. The measurement information 44 may be the neighbor cell list but may also be a different information and/or may additional or less information. Although being represented as a table, the measurement information 44 may comprise any other structure that may be decoded at a receiver. By way of a non-limiting example only, the measurement information 44 lists a number of cell IDs and/or identifiers referring to a base station. Additionally, the measurement information 44 may comprise a number of measurement values such as a Reference Signal Strength Indication (RSSI), a Reference Signals Received Power (RSRP) and/or values derived thereof such as Reference Signals Receive Quality (RSRQ), information indicating a LOS path with may be binary or a path loss computation, i.e., a value indicating the path loss. Alternatively, a lower amount of information, different information and/or additional information may be comprised by the measurement information 44. For example, only a cell-ID may be transmitted, for example, indicating base stations comprising a good channel being above a certain threshold and therefore indicating base stations that might receive interference.

According to embodiments, a number of entries in the measurement information 44 may be limited to a number of more than six intra-frequency neighbors and/or limited to a number of more than three inter-frequency neighbors. Thus, according to embodiments, a user equipment may be configured for providing a neighbor cell list having a number of at least 10, at least or at least 20 entries. The values given in the measurement information 44 may indicate cells that may be interfered by the UE having measured the measurement information 44.

The categorizer may be configured for categorizing the UE as airworthy UE being a flying UE, i.e., as a flying UE, based on a variation within a plurality of measurement values of the signal characteristic indicating a signal quality such as the RSSI, the RSRP, the RSRQ or other receive signal metrics and/or a path loss indicator, a link budget computation or the like, the signal characteristic indicating a signal quality between the UE and at least a subset of the plurality of base stations. The difference of RSRP/RSRQ/other measurements between the best and the worst neighbor cell provide an indication for an airborne UE. For example, for ground based UEs, the interference and thus values such as the RSRP/RSRQ (or any other measurements such as measurements provided per neighbor cell) are expected to vary strongly. E.g., only few neighbor cells are expected with almost equally very good/high RSRP/RSRQ values. For airborne UEs, depending on the height and environment, LoS will be possible to many neighbor base stations. Thus, many more neighbors with RSRP/RSRQ with good/high RSRP/RSRQ values are expected to be listed in the neighbor cells. The categorizer may therefore be configured for categorizing the UE as airworthy UE being a flying UE based on a number base stations operating a corresponding number of neighboring cells of the UE.

By way of example, in an urban and terrestrial scenario, the Neighbor Cell List may comprise entries having a low difference there between, as simplified, the UE has either a good channel to a neighbor or no channel. In contrast, when flying at a certain height, a lot of communication links or paths may be obtained, for example, even to base stations facing a high distance and therefore comprising a high difference when comparing the signal characteristic. Therefore, the variation within a plurality of measurement values of the signal characteristic indicating a signal quality in between the UE and at least a subset of the plurality of base stations (the base stations to which communication is possible or from which signals are received) may be used by the categorizer for categorizing the UE. For evaluating the differences between values, the measurement information 44 or the list obtained thereof, may be sorted.

In other words, typically the Physical Cell Identity (PCI) of the neighbor cells in the measurement report are sorted in decreasing order with respect to a ranking criterion, see [12]. Thus, the UE or the categorizer may be configured for sorting the measurement information 44 which may be, in one example, the PCIs of the neighbor cells. For ground based UEs the interference and thus the RSRP/RSRQ or any other measurements provided per neighbor cell are expected to vary strongly such that only few neighbor cells are expected in the Neighbor Cell List with almost equally very good/high RSRP/RSRQ values. For airborne UEs, depending on the height and environment, LoS will be possible to many neighbor BSs, i.e., base stations. Thus, many more neighbors with RSRP/RSRQ with good/high RSRP/RSRQ values are expected to be listed in the neighbor cells. As a result, the difference of the RSRP/RSRQ/other measurements between the best and the worst neighbor cell provide an indication of an airborne UE. Thus, the history such as UE on the ground measurements, the RSRP/RSRQ/other measurement difference in the sorted list of neighbor cells for the same number of neighbors in the sorted list is expected to significantly increase the difference of an airborne UE when using the same criteria. For an airborne UE in an urban environment with low/medium height and/or with high houses, the difference may be less and thus, to be clearly detected, the number of neighbors may be used. The main difference to UEs in houses is expected from lower neighbor cell measurements due to indoor conditions. Alternatively, the number of neighbor cells in the measurement report, i.e., the measurement information 44, can be used to differentiate between aerial and ground-based UEs. The listed number of neighbor cells will increase strongly for airborne UEs compared to ground-based UEs as only neighbor cells will be included in the measurement reports, which exceeds certain thresholds. Therefore, a measurement report with an enlarged list of neighbor cells may be used, when compared to the lists specified in [12]. I.e., the signal characteristic to be evaluated may be one of a Line of Sight characteristic between the UE and the plurality of base stations, a received signal's strength indication determined at the UE, a reference signal's received power determined at the UE and/or a value derived thereof such as RSRQ or a path loss computation. Any combined conditions such as a number of neighbor cells and difference between measurements may also be used by the categorizer for providing a valued and precise distinguishing factor or information.

For enabling a drone identification and network action for uncertified usage, the signaling protocol may be designed to enable airborne UE identification as described above. Furthermore, between terrestrial UEs and uncertified airborne UEs such as UEs carried by drones, the heights at which a airborne UE operates may enable multiple strong LoS components with neighboring base stations in addition to the airborne UE's serving base station. From the UE's measurement report of neighboring physical cell IDs, it is possible to determine if a UE is either a drone or terrestrial type, e.g., based on the comparison of the analyzed history and/or the UE behavior between the mobility states of initially taking off/ground-based and landing. Similarly, an event triggered comparative measurement report may be obtained when the airborne UE is flying and when landing a drone carrying a UE, i.e., the UE is back on the ground. The event may be triggered corresponding to the airborne UE's mobility state. Terrestrial UEs in high-rise buildings such as a dense urban area, are not anticipated to experience such strong omnidirectional LoS components due to their indoor propagation losses within indoor environments. Therefore, the average RSRP/RSRQ of all neighboring cells in the measurement report may be taken into account as follows by the UE or by the categorizer:

$$Avg_{Ncell} = \frac{\sum_{i=1}^{N} RSRQ(i)}{N}$$

or

$$Avg_{Ncell} = \frac{\sum_{i=1}^{N} RSRP(i)}{N}$$

wherein N represents the total number of neighboring cells and RSRQ (i)/RSRP (i) represents the corresponding measurement at the $i^{th}$ cell. However, N is adapted so as to include all available cells as seen by the UE and not just a subset of cells. By way of example, the categorizer 36 may be configured for providing the categorizing information so as to categorize the UE12 as airworthy UE being a specific type thereof. For example, the categorizer may be configured for categorizing the UE as being a certified air vehicle. The term certified may relate to communication in the air, i.e., to aerial communications in the wireless communication network. This may be understood as that the UE is certified for aerial use. Such certifications may be defined, for example, by the service provider operating a base station. The categorizer may alternatively or in addition be configured to categorize the UE as being an air vehicle uncertified with respect to the aerial communications. In both cases, the air vehicle may be the user equipment, for example, a drone having incorporated a modem or communication module or the like.

Alternatively, the UE may be attached to a flying apparatus such as a drone being configured for remote control but being unable to communicate with the wireless network itself. Therefore, a user equipment may be attached to the flying apparatus and may thus allow for the communication functionality. The UE may therefore move according to a flying apparatus. The UE may be certified with respect to the aerial communications or may be uncertified with respect to the aerial communications. The categorizer may be configured for providing the categorizing information so as to indicate the UE as being certified or uncertified. The controller may be configured for at least limiting the communication of the air vehicle and the UE being uncertified with respect to the aerial communication and/or to control the air vehicle uncertified with respect to the aerial communication so as to perform interference mitigation. In other words, the identification of uncertified (airborne) drones or UEs in a mobile communication network may involve carrying a standard legacy UE. The following drone use cases have been identified, all of which will introduce interference into the network if not properly mitigated:

a. Certified airborne UE / air vehicle with embedded modem (subscription enables the drone certified UE to fly);
b. Uncertified airborne UE / air vehicle with embedded modem (traditional network baring methods currently in use may be used to blacklist the airborne UE);
c. Certified airborne (legacy) UE attached to a drone or air vehicle (constraint access control mechanisms may be enabled once it becomes airborne to limit interference); and
d. Uncertified airborne (legacy) UE attached to a drone air vehicle (limited/restricted access may be introduced once it has to become airborne).

I.e., a certified drone may be allowed to communicate in the wireless network even when flying because it may operate in accordance with the specification of the network provider. In case of an uncertified drone or an uncertified UE attached to a drone, the access may be restricted by the controller, for example, only allowing to use specific resources, a low number of resources and/or a specific transmission power. As described in connection with the uncertified drone, the controller may also control the drone or the base station so as to blacklist the drone, i.e., to deny a service to the drone. Same may apply to the uncertified UE attached to a drone in point d. The limited or restricted access or even a blacklisting may be performed by the controller, for example, as long as the user equipment is in the air or above a certain height threshold value, for example, in accordance to a height of the buildings above which a high number of channels is obtained that comprise a good quality to different base stations. I.e., the categorizer may be configured for providing the categorizing information so as to indicate if the UE is in a flight mode and is configured to communicate in accordance with aerial communications supporting a flight mode. The controller may be configured for excluding the UE (blacklisting) from communication at least as long as the UE is in flight mode, i.e., above of the height threshold value.

Alternatively, the controller may control the UE so as to perform interference mitigation with respect to base stations of the plurality of base stations being outside a wireless cell of the wireless network, the wireless cell being operated by the serving base station and operating the cell in which the UE is located. Especially in connection with the certified airborne UE attached to a drone and/or the uncertified airborne UE attached to a drone, the categorizer is configured for repeatedly categorizing the UE to repeatedly provide the categorizing information. The controller may be configured for time varyingly controlling the UE based on a varying categorizing information. Based on a condition of the UE and/or the drone to which it is attached, the categorizer and/or the controller may determine if the UE has to be restricted in its communication. As soon as the UE is below the height threshold value or is on the ground, the restriction may be released, i.e., the UE may be removed from a blacklist or the like.

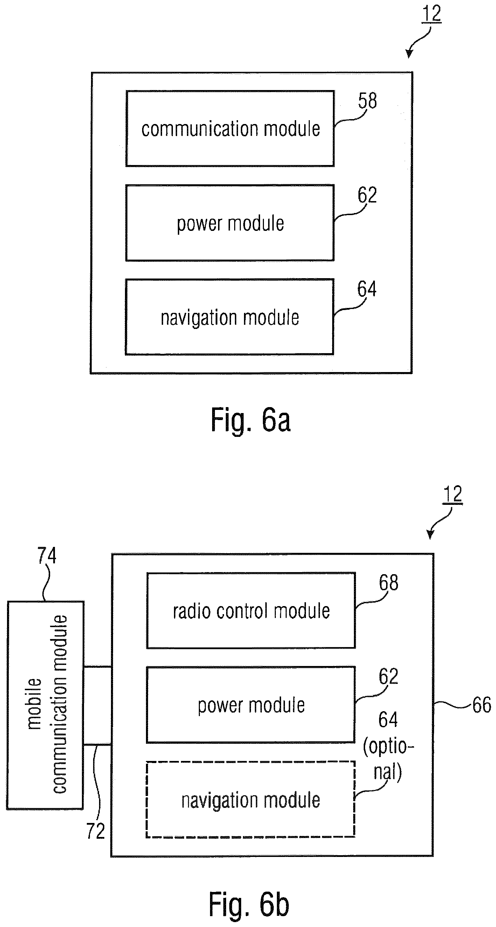

Fig. 6a shows a schematic block diagram of the drone 12 according to an embodiment. The drone 12 comprises a communication module 58, for example an LTE modem or a new radio modem, a power module 62, for example, a battery in connection with propellers and comprises a navigation module 64 configured for navigating. For example, the navigation module 64 may comprise a GNSS module line.

In other words, the proposed embodiments, aim to address the problem of the potential interference caused by drones in a network, especially for uplink, downlink and sidelink. Embodiments cover the cases where:

1. The drone would first need to be identified (in the case of uncertified usage) as a airborne UE before performing the required interference mitigation;
2. The network performs interference mitigation irrespective of the type of UE, i.e., terrestrial UE or airborne UE.

Fig. 6b shows a schematic block diagram of a drone 12 according to another embodiment, wherein the drone 12 comprises an apparatus 66 configured for flying. The apparatus 66 comprises a radio control module 68, for example, enabling a remote of the drone 12. Further, the drone 12 comprises the power module 62 and may optionally comprise the navigation module 64. The drone 12 further comprises a mechanical interface 72 configured for mechanically connecting a mobile communication module 74, e.g., a smart phone or the like, to the drone 12.

Fig. 6a illustrates a drone 12 according to points a and b, i.e., the drone 12 may be certified or uncertified. In contrast, Fig. 6b shows the drone 12 for configurations c and d, i.e., it may depend on the attached UE, i.e., the mobile communication module 74, if the drone 12 is certified or uncertified.

In the following, reference will be made to interference mitigation that may be performed besides the blacklisting. According to an embodiment, the controller 46 may be configured for reducing a minimum transmission power $P_{min}$ of the UE dependent on the categorizing information. For example, when categorizing the UE as being allowed to fly and being allowed to communicate at the same time, then the interference mitigation with respect to neighboring cells may be performed.

In other words, the identification of uncertified airborne UE usage while attached to an UAV may be performed by the categorizer and/or the controller. Alternatively or in addition, corresponding network actions may be performed, e.g., through the reporting of listed neighboring cells using the physical cell IDs as a reference, which indicates a strong LoS characteristic. This can be implemented by a network-defined threshold based on the history of the RSSI/RSRP neighboring intra-frequency or inter-frequency neighboring cell measurements measured by the uncertified airborne UE. The analyzed history of the airborne UE behavior may include airborne UE measurements during takeoff/on the ground (while still being classified as a terrestrial UE) while being compared when the airborne UE is hovering/changing altitude. Other UE measurement reports of neighboring cells in the same network may be used and/or may be computed on the network side and/or at the UE. Such a processing may vary according to the type of environment, e.g., in a dense urban or sub-urban and rural environment. This may be considered by the categorizer and/or by the controller. Although referring to the Neighboring Cell List, the embodiments described herein do not preclude the presence of new RSSI/RSRP measurements of neighboring cells detected by the UE.

When having identified a respective UE, interference mitigation may be performed. This may include, but is not limited to, an additional signaling to configure the drone's minimum transmission power to reduce the interference caused by the uplink signal to the UE on the drone. The minimum power level may thus further be reconfigurable and may be decreased in specific scenarios to minimize the interference in the uplink band. For example, the drone 12 facing a plurality of good channels, as described in connection with Fig. 4b, may reduce its minimum transmission power, i.e., below the minimum standard power, in order to avoid interference.

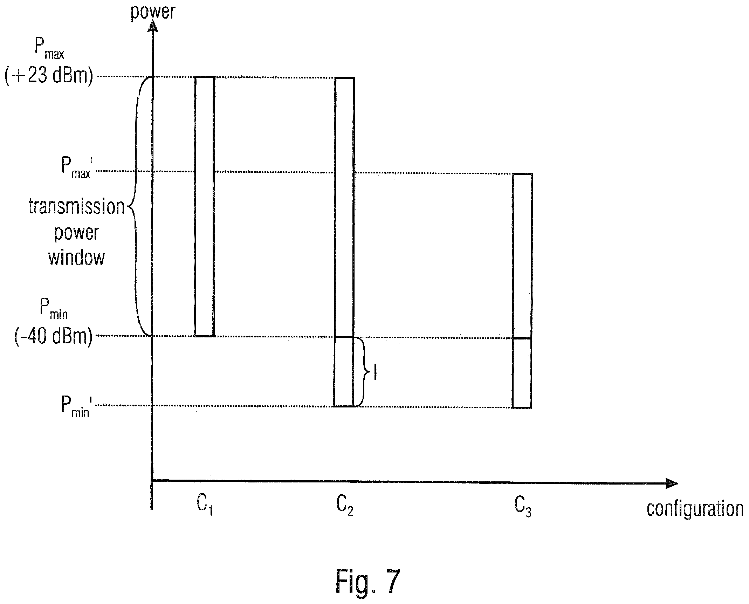

Fig. 7 shows a schematic graph showing different configurations of a UE at the abscissa being $C_1$, $C_2$ and $C_3$. At the ordinate, a transmission power of the UE is illustrated. In configuration $C_1$, the UE may be configured for transmitting a signal between a minimum power $P_{min}$ and a maximum power $P_{max}$. By non-limiting example, this may be a power interval ranging from -40 dBm to +23 dBm, e.g., according to the LTE standard. The controller may be configured for reducing a minimum transmission power $P_{min}$ of the UE dependent on the categorizing information, i.e., when categorizing the UE as to have performing interference mitigation, the controller may directly or indirectly (via the base station or a different UE) control the UE by transmitting a controlling information. The controlling information may comprise at least one of an interference threshold parameter I indicating the allowable interference and/or indicating a power level, i.e., an amount of power by which the transmission power of the UE has to remain below a predefined min-

imum transmission power $P_{min}$ in the network, a power information indicating a minimum transmission power $P_{min}$' and a power reduction information indicating a minimum power $P_{min}$' and a maximum power $P_{max}$' between which the user equipment may select its transmission power. The interference threshold parameter may thus, for example, indicate a level of interference to be reduced or a level of power or a value which allows deriving of such values.

The base station may be configured for transmitting the controlling information to the UE. Alternatively, the controller may transmit the controlling information. Thus, when still referring to Fig. 7, configuration $C_1$, the user equipment is adapted so as to perform communication in accordance with a respective predefined configuration like the LTE standard or according to new radio. By receiving the controlling information comprising the interference threshold parameter I, the user equipment may adapt its minimum transmission power $P_{min}$' by a value indicated by the interference threshold parameter, for example 10 dBm, 20 dBm or 30 dBm or a different or even higher value. Alternatively or in addition, the controlling information may indicate the adapted minimum power level $P_{min}$' directly. As illustrated for configuration $C_3$, in addition to the minimum power level $P_{min}$' also the maximum power level $P_{max}$' may be adapted.

In other words, uplink interference mitigation of an airborne UE through dynamic minimum output power range adaption may be achieved by adapting at least the minimum output power. The minimum output power adaptation may be based on different concepts:

a) Introduction of an adjustable interference threshold parameter I which can be reconfigured by the base station, for example, when the UE first connects to a base station to determine its Physical Random Access CHannel (PRACH) preamble transmit power when first connecting to the base station.

b) The airborne UE may use the interference threshold parameter as a basis to determine the allowable interference limit. In the extreme case, the UE can self-configure the minimum output power parameter within the rage of, e.g., -40 dBm as it fixed, down to -60 dBm. Messages or signals may be sent from the network to adjust the dynamic range. If the parameter I indicates an interference, the UE may determine a respective power level therefrom. Alternatively or in addition, the minimum output power $P_{min}$' may be directly signaled from the base station or the controller to the UE, for example as a specific value, for example, -50 dBm, -60 dBm, -70 dBm, or any other suitable value. This may include a transmission of a value representing an index, wherein the user equipment comprises an index table comprising the indexes and associated values such that the submitted information selects one of the values in the table. For example, the signal may indicate to use a third value from the predefined table of minimum power values. Alternatively, the value may be transmitted as a relative value so as to indicate to decrease the minimum power by a specific power, e.g., to reduce it by 10 dBm, 20 dBm or the like. The procedure of adapting the minimum output level may be based on the block error rate (BLER) detected by the base station, which is still very low in a usage scenario, wherein the UE is under good LoS conditions to the base station and thus the minimum transmit power of -40 dBm may be still too high and therefore remains a source of interference to other base stations in the vicinity.

c) Dynamic or static minimum transmit power self-configuration of the UE may be controlled by use of the network signaling, i.e., the controlling information. E.g., when the UE knows its special type of an airborne UE, it may select its minimum transmit power by its own. This scenario may also be applied to the interference in D2D scenarios.

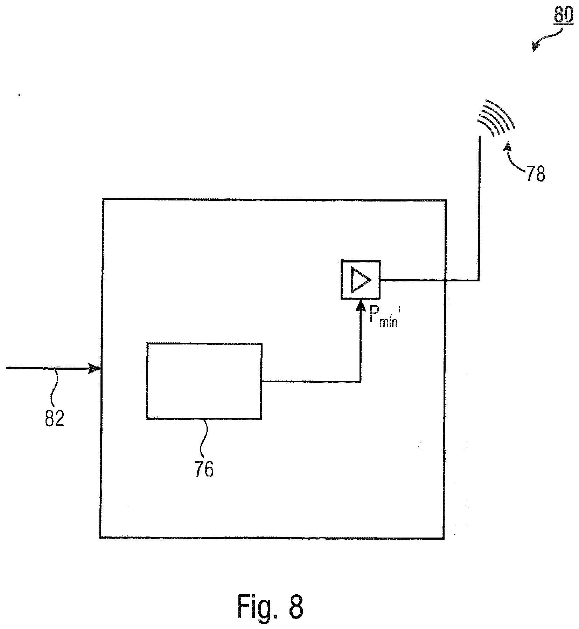

Fig. 8 shows a schematic block diagram of a user equipment 80 according to an embodiment. The user equipment 80 may be, for example, the user equipment/drone 12. The user equipment is configured for operating in a wireless network. The wireless network may be, for example, the wireless network 300 or 400 in which a base station operates a respective network cell. Alternatively, the wireless network may be an autonomous network in which a number of UEs organize themselves, i.e., a D2D network. The user equipment 80 comprises a power adjuster 76 configured for adjusting a minimum transmission power, i.e., the transmission power $P_{min}'$ indicating a lowest power value for wirelessly transmitting a signal 78 dependent on a received controlling information 82 for example, received from the controller 46.

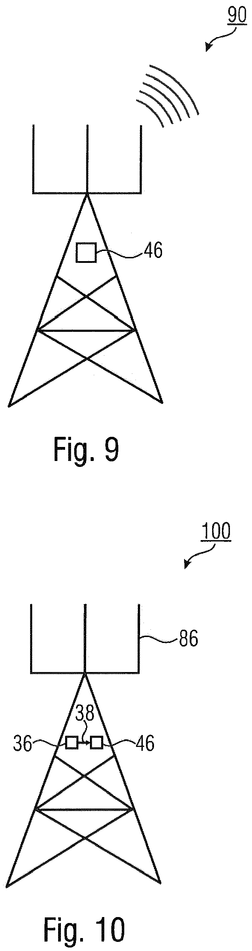

Fig. 9 shows a schematic block diagram of a base station 90 configured for operating a wireless cell of a wireless communication network, for example, of the network 300 or 400. The base station 90 may be, for example, the base station 16. The base station 90 comprises the controller 46 configured for controlling an associated user equipment so as to vary its minimum transmission power. For example, the controller 46 may control the base station so as to transmit a signal 84 comprising the controlling information such that the UE receives the respective controlling information. The controller 46 may be configured for controlling the minimum transmission power used for association of the UE with the base station, i.e., using the Physical Random Access CHannel (PRACH) and/or for controlling the minimum transmission power for transmitting user data, for example, in the Physical Uplink Shared CHannel (PUSH). The adaptation may be performed using a closed loop power control mechanism i.e., the controlling information provided to the UE and the reduction of transmission power at the UE may be performed iteratively until the interference is low enough.

Fig. 10 shows a schematic block diagram of a base station 100 according to an embodiment, the base station 100 configured for operating a wireless cell of a wireless communication network, for example, a cell of the network 300 or 400. The base station 100 may be, for example, the base station 16. The base station 100 comprises a wireless interface 86 for communicating with a user equipment, for example, an antenna or array thereof. The base station 100 comprises the categorizer 36 configured for providing the categorizing information 38 categorizing the UE as an airworthy UE based on a measurement of a signal characteristic between the UE and a plurality of base stations, i.e., at least the base station 100 and a further base station. The base station 100 comprises the controller 46 for controlling the UE dependent on the categorizing information 38.

When referring again to Fig. 3, a further embodiment relates to a wireless network comprising at least one base station configured for operating a cell of a wireless network, for example, the network 300 or 400, wherein alternatively or in addition, a base station 90 or 100 may be included and/or a user equipment 80. Then network comprises at least one user equipment, for example, the drone $12_1$ configured for communicating with the base station, e.g., the base station $16_4$. The network comprises the categorizer 36 configured for providing the categorizing information 38 categorizing the UE as airworthy UE based on a measurement of a signal characteristic between the UE and the base station $16_4$, i.e., it may be determined if the UE is flying or not. The network further comprises the controller 46 configured for controlling the network so as to restrict communication of the UE dependent on the categorizing information. I.e., when having determined that the UE is probably uncertified with respect the aerial communication, the controller 46 may cause the drone $12_1$ to be blacklisted, at least as long as it is in the air, above the height threshold value respectively. Therefore, the signal characteristic may also relate to a plurality of base stations.

The categorizer 36 may be configured for repeatedly categorizing the UE, for example, triggered by a time interval, e.g., each 30 seconds, each minute or the like and/or triggered by an event detected and reported by the UE and/or detected by the base station, for example, a liftoff, a change of altitude, a movement and/or a landing. The controller 46 may be configured for time varyingly restricting the communication of the UE, i.e., the drone $12_1$ based on a varying categorizing information. I.e., when the drone $12_1$ is blacklisted and has afterwards landed or is at least below the height threshold value, the drone $12_1$ may be removed from the blacklist and may be allowed to communicate. I.e., a limited/restricted temporary access may be signaled to the airborne (legacy) UE, if it has not been authorized to be airborne. An example may be to temporarily block access (blacklist) or reduce the transmit power, once the network has detected that the UE is airborne and re-grant access once the UE lands back on the ground. The base station and the non-certified airborne UE may signal for a restrictive idle mode where for a defined period the airborne UE is in a silent mode, where RACH resource transmission monitoring is blocked. A temporary restriction as long as the UE is in the air may be signaled between the UE and the base station through an update of the system information, e.g., by reading the SIB 1 after identification by the network that the UE is an airworthy UE or a flying UE.

In particular, certified drones may indicate its type of UE to the network. For example, airborne UEs may have characteristic identifiers such as international mobile equipment identity numbers (IMEI) imposed by drone manufacturers in a similar fashion to mobile UE vendors. This allows the network to identify the type of UE based on the subscriber information, i.e., the drone or terrestrial UE. Alternatively or in addition, a notification of the special type of the UE, e.g., drone type UE, to the network may be obtained over the air. Alternatively or in addition, a temporary blacklist may be used. Traditionally in LTE, the mobility management entity (MME) and the Serving GPRS Support Node (SGSN) verify via ECR (mobile-equipment-identity-check-request) and ECA (mobile-equipment-identity-check-answer) commands to the EIR (equipment identity register) in order to verify if the UE is authenticated to access the network. The MME and the SGSN both have access to the HSS (home subscriber server). Three states exist, a white list identifying authenticated user equipment; a blacklist identifying user equipment not authenticated to access the network; a gray list identifying intermediary states used by the telecom operators on discretion. The temporary blacklist flag for airborne UEs may be transmitted via RRC (radio resource control) signaling to be set upon the re-authentication signaling response from the UE to the network, indicating that the (legacy) airborne UEs do not have any further network access to be airborne. I.e., the controller may transmit the controlling information to the network, for example, using a flag, indicating that the user equipment is restricted or excluded from network access. Alternatively, (instead of blacklisting) or in addition, to prevent drone type unauthorized airborne UEs may either be blocked from accessing the network, not be granted with an network resources, may be restricted in the transmission (TX) power, e.g., power control may limit the TX power to the lowest possible value or anything below, the airborne UE may be controlled into a silent mode, i.e., the UE does not transmit or receive RACH resources in this mode. It may be based on the operator's decision, whether these restrictions will automatically be removed, when the UE is identified to be back on the ground or after a defined time period or only on operator interaction.

When performing interference mitigation, controlling the output power may limit the interference to neighboring cells, especially for airborne UEs while operating at higher elevated altitudes brings about better signal conditions (LoS). However, a fine balance may be maintained in order to not affect the UE throughput and quality-of-service (QoS) performance. MPR and A-MPR techniques have been specified for UEs in order to satisfy the general requirements of out of band transmissions and to meet the ACLR (adjacent channel leakage ratio) levels for terrestrial UEs as described in [8]. A dynamic control of the power reduction range (specifically the minimum output power as described in [13]) can be especially advantageous for airborne UEs with strong LoS components to prevent interference with other neighboring base stations. According to embodiments, an adaptation of the minimum output power range, for example, dynamically may pertain the inclusion of an additional information element, for example, in the System Information Block (SIB 2) that enables the airborne UEs to adapt its PRACH preamble power in order to minimize interference to neighboring cells, e.g., during authentication. The SIB 2 contains the radio resource configuration information pertinent to the initial connection setup of an UE (common for all UEs during the attached procedure) with a base station. The UE's transmission power operates within a dynamic range pre-defined by its maximum output power ($Pc_{Max}$; $P_{Max}$) and minimum output power ($Pc_{Min}$; $P_{Min}$). Currently as specified in LTE, a UE may be allowed to operate with a transmit power ($P_{UE}$) within an interval of: $Pc_{Min} \leq P_{UE} \leq PC_{Max}$, wherein $Pc_{Max}$ = 23 dBm and $Pc_{Min}$ = -40 dBm.

With the introduction of connection airborne UEs to existing LTE network infrastructure, a set of new challenges emerge. One challenge includes the drone's ability to act as an interference source on the uplink for multiple neighboring cells due to the high link quality available at higher altitudes. As such, the minimum defined UE transmit power ($Pc_{Min}$) may not be sufficient in limiting the uplink interference to neighboring cells, in the case of airborne UEs. An example application of techniques according to embodiments involves the dynamic control of the initial PRACH minimum output transmit power ($P_{RACH-Min}$). During the initial connection setup procedure, the UE is required to send PRACH preambles at a specific target transmit power to the base station by reading the information elements (IEs) in SIB 2 provided by the base station. The base station expects to receive the PRACH preambles at a certain specified power level contained within the *preambInitialReceivedTargetPower* ($P_{RACH-BS}$) IE in addition to the delta preamble at parameter ($\delta_{RACH}$) as described in [14] in table 7.6-1 which is dependent on the preamble format. The $P_{RACH-BS}$ and $\delta_{RACH}$ IEs are contained in the SIB 2 to be read by the UE. The preamble received target power ($P_{\alpha}$) is therefore given as:

$$P_{\alpha} = P_{RACH-BS} + \delta_{RACH}$$

The UE power required to transmit the PRACH preamble ($P_{RACH}$) is

$$P_{RACH} = P_\alpha + PL,$$

where *PL* represents the computed receiver path loss between the UE and base station. The *PL* represents the difference between the reference signal power at the base station ($P_{Ref-BS}$) (read from SIB 2) and the RSRP at the UE:

$$PL = P_{TX} - P_{Rx} = P_{Ref-BS} - RSRP$$

In order to mitigate interference from the airborne UE, the parameter ($I_{thresh}$) is proposed to dynamically control the minimum transmit outer power, which is set at the base station based on the available interference knowledge of neighboring cells (such as SINR, INR) (by leveraging existing schemes such as intercell interference coordination). The following condition defines the existing allowable $P_{RACH}$ in relation to the $Pc_{Min}$ to ensure that the airborne UE avoids exceeding the interference threshold set by the base station:

$$P_{RACH} \leq Pc_{Min} - I_{thresh}$$

where $I_{thresh} \geq 0$. If $I_{thresh} = 0$, then the base station has been deemed no negative interference impact to neighboring cells and can transmit the PRACH preamble with minimum power $PC_{Min}$. Thus, the UE may be controlled to reduce the transmission power below $Pc_{Min}$ by at most $I_{thresh}$.

I.e., by using the interference threshold parameter I, $I_{Thresh}$ respectively, the used transmission power may be lower than the originally configured minimum transmit power. The same concept may apply for D2D communication where the minimum power level for PC5/sidelink transmission may also be configured for. Especially for D2D communication under line-of-sight conditions, like in drone communication, the output power may be further dynamically reduced and configured.

Embodiments address the aforementioned issues including the identification of uncertified drones by the network and thereafter the management of the severe uplink and sidelink interference, which may impact neighboring cells.

Although having been described partially in different embodiments, the aspects described herein, for example, of categorizing a UE, of blacklisting it, of controlling it so as to perform interference mitigation and/or to use a minimum transmission power below a predefined value may be combined with each other.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] Intel, Preliminary results of interference distribution for aerial vehicles, 3GPP Technical Document-R1-1707324, Hangzhou-P.R. China, May 2017.

[2] Qualcomm, System level performance and interference mitigation techniques for aerial vehicles, 3GPP Technical Document- R1-1708813, Hangzhou-P.R. China, May 2017.

[3] NTT DOCOMO INC, Ericsson, Study on enhanced Support for Aerial Vehicles, 3GPP Work Item: RP-170779, Mar. 2017.

[4] Nokia, Alcatel-Lucent Shanghai Bell, "Potential Enhancements for Aerial Vehicles", 3GPP Technical Document-R1-1707198, Hangzhou-P.R. China, May 2017.

[5] Huawei & HiSilicon,"Potential enhancements for drones," 3GPP Technical Document-R1-1707016, Hangzhou-P.R. China, May 2017.

[6] 3GPP TS 36.213 V14.2.0, Physical layer procedures, Mar. 2017.

[7] NTT DOCOMO, "Initial views on potential problems and solutions for aerial vehicles", 3GPP Technical Document-R1-1708433, Hangzhou-P.R. China, May 2017.

[8] 3GPP TS 36.101 V14.3.0, User Equipment (UE) radio transmission and reception, Mar. 2017.

[9] 3GPP TS 25.942 V14.0.0, Radio Frequency system scenarios, Mar. 2017.

[10] Sequans, Interference Mitigation for Aerial Vehicles, 3GPP Technical Document-R1-1714071, Prague-Czech Republic, Aug. 2017.

[11] Qualcomm Incorporated, Identification and certification of Aerial Vehicles, Technical Document-R2-1708238, Berlin-Germany, Aug. 2017.

[12] 3GPP TS 36.331 V14.2.0, Radio Resource Control (RRC) Protocol Specification, Mar. 2017.

[13] Nortel Networks, Cell selection for very close UEs, 3GPP Technical Document-R2-023000, Sophia Antipolis France, Nov. 2002.

[14] 3GPP TS 36.321 V14.3.0, Medium Access Control (MAC) protocol specification, June. 2017.

**Claims**

1. A wireless network (300, 400) comprising:

   a plurality of base stations ($16_1$-$16_5$) configured for operating the wireless network;
   a user equipment (12) configured for communicating with at least one of the plurality of base stations ($16_1$-$16_5$);
   a categorizer (36) configured for providing a categorizing information (38) categorizing the UE (12) as airworthy UE (12) based on a measurement of a signal characteristic between the UE (12) and the plurality of base stations ($16_1$-$16_5$); and
   a controller (46) for controlling at least one of the plurality of base stations ($16_1$-$16_5$) or the UE (12) dependent on the categorizing information (38).

2. The wireless network of claim 1, wherein the categorizer (36) and the controller (46) are a part of a base station (16) of the plurality of base stations ($16_1$-$16_5$).

3. The wireless network of claim 1 or 2, wherein the categorizer (36) is configured for categorizing the UE (12) as an airworthy UE (12) being a flying UE (12) based on a variation within a plurality of measurement values of the signal characteristic indicating a signal quality (RSSI, RSRP, LoS) between the UE (12) and at least a subset of the plurality of base stations ($16_1$-$16_5$) and/or based on a number of base stations to which the UE (12) has a signal quality of at least a signal quality threshold level.

4. The wireless network of one of preceding claims, wherein the UE (12) is configured for transmitting a Neighbor Cell List to at least one receiving base station (16) of the plurality of base stations ($16_1$-$16_5$), , wherein the categorizer (36) is configured for categorizing the UE (12) as airworthy UE (12) being a flying UE (12) based on a number of base stations (16) operating a corresponding number of neighboring cells of the UE (12).

5. The wireless network of one pf previous claims, wherein the signal characteristic is one of a Line of Sight characteristic between the UE (12) and the plurality of base stations ($16_1$-$16_5$), a Received Signal Strength Indication determined at the UE (12), a Reference Signals Received Power determined at the UE (12) and a value derived thereof.

6. The wireless network of one of previous claims, wherein the categorizer (36) is configured for providing the categorizing information (38) so as to categorize the UE (12) as flying UE (12), wherein the controller (46) is configured to control the UE (12) so as to perform interference mitigation with respect to base stations (16) of the plurality of base stations (16₁-16₅) being outside a cell of the wireless network in which the UE (12) is located, or so as to restrict communication of the UE (12).

7. The wireless network of one of previous claims, wherein the categorizer (36) is configured for providing the categorizing information (38) so as to indicate if the UE (12) is in a flight mode and is configured to communicate according to a communications standard supporting a flight mode, wherein the controller (46) is configured for excluding the UE (12) from communication at least as long as the UE (12) is in flight mode.

8. The wireless network of one of previous claims, wherein the categorizer (36) is configured for providing the categorizing information (38) so as to categorize the UE (12) as airworthy UE (12) being at least one of

   • a certified air vehicle certified to aerial communications in the wireless communication network, the air vehicle being the UE (12);
   • an air vehicle uncertified with respect to the aerial communications, the air vehicle being the UE (12);
   • a UE (12) certified with respect to the aerial communications, the UE (12) moving according to a flying apparatus; and
   • a UE (12) uncertified with respect to the aerial communications, the UE (12) moving according to a flying apparatus;

   wherein the controller (46) is configured for at least limiting the communication of the air vehicle and the UE (12) being uncertified with respect to the aerial communications and/or to control the air vehicle uncertified with respect to the aerial communications so as to perform interference mitigation.

9. The wireless communications network of one of previous claims, wherein the categorizer (36) is configured for repeatedly categorizing the UE (12) to repeatedly provide the categorizing information (38), wherein the controller (46) is configured for time variantly controlling the UE (12) based on a varying categorizing information (38).

10. The wireless network of one of previous claims, wherein the controller (46) is configured for reducing a minimum transmission power of the UE (12) dependent on the categorizing information (38).

11. A base station (90) configured for operating a wireless cell (34) of a wireless communication network (300, 400(, the base station (16) comprising:

   a controller (46) configured for controlling an associated user equipment (UE, 12) so as to vary its minimum transmission power.

12. The base station (90) of claim 11, wherein the controller (46) is configured for controlling the minimum transmission power used for association of the UE (12) with the base station (90) and/or for controlling the minimum transmission power used for transmitting user data.

13. The base station (90) of claim 11 or 12, wherein the controller (46) is configured for provide a controlling information (82) comprising at least one of

   an interference threshold parameter indicating an amount of power by which the transmission power of the UE (12) has to remain below a predefined minimum transmission power in the network;
   power information indicating a minimum transmission power to be used by the UE (12); and
   a power reduction information indicating a minimum power and a maximum power between which the UE (12) selects its transmission power;

   wherein the base station (90) is configured for transmitting the controlling information (82) to the UE (12).

14. A base station (100) configured for operating a wireless cell (34) of a wireless communication network (300, 400), the base station (100) comprising:

   a wireless interface (86) for communicating with a user equipment (UE, 12);
   a categorizer (36) configured for providing a categorizing information (38) categorizing the UE (12) as airworthy UE (12) based on a measurement of a signal characteristic between the UE (12) and a plurality of base stations (16₁-16₅); and
   a controller (46) for controlling the UE (12) dependent on the categorizing information (38).

15. A User equipment (80) configured for operating in a wireless network , the user equipment (80) comprising:

   a power adjuster (76) configured for adjusting a minimum transmission power ($P_{min}$) indicating a lowest power value for wirelessly transmitting a signal dependent on a received controlling information (82).

16. A wireless network comprising:

at least one base station (16) configured for operating a cell of the wireless network;

a user equipment (12) configured for communicating with the base station;

a categorizer (36) configured for providing a categorizing information (38) categorizing the UE (12) as airworthy UE (12) based on a measurement of a signal characteristic between the UE (12) and the base station; and

a controller (46) configured for controlling the network so as to restrict communication of the UE (12) dependent on the categorizing information (38).

17. The wireless network of claim 16, wherein the categorizer (36) is configured for repeatedly categorizing the UE (12) to repeatedly provide the categorizing information (38), wherein the controller (46) is configured for time variantly restricting the communication of the UE (12) based on a varying categorizing information (38).

Fig. 1

Fig. 2

EP 3 462 646 A1

Fig. 3

Fig. 4a

Fig. 4b

44

| cell-ID | RSSI | RSRP | RSRQ | LoS | ... |  |  |
|---------|------|------|------|-----|-----|--|--|
| $ID_1$ | $RSSI_1$ | $RSRP_1$ | $RSRQ_1$ | Y/N | | | |
| $ID_2$ | $RSSI_2$ | $RSRP_2$ | $RSRQ_2$ | Y/N | | | |
| $ID_3$ | $RSSI_3$ | $RSRP_3$ | $RSRQ_3$ | Y/N | | | |
| $ID_4$ | $RSSI_4$ | $RSRP_4$ | $RSRQ_4$ | Y/N | | | |
| $ID_5$ | $RSSI_5$ | $RSRP_5$ | $RSRQ_5$ | Y/N | | | |
| $ID_6$ | $RSSI_6$ | $RSRP_6$ | $RSRQ_6$ | Y/N | | | |
| $ID_7$ | $RSSI_7$ | $RSRP_7$ | $RSRQ_7$ | Y/N | | | |
| $ID_8$ | $RSSI_8$ | $RSRP_8$ | $RSRQ_8$ | Y/N | | | |

Fig. 5

<u>12</u>

communication module ~58

power module ~62

navigation module ~64

## Fig. 6a

<u>12</u>

74

mobile communication module

radio control module ~68

power module ~62

64 (optio-nal)

navigation module

~66

72

## Fig. 6b

Fig. 7

Fig. 8

90

46

Fig. 9

100

86

38

36  46

Fig. 10

Europäisches
Patentamt

European
Patent Office

Office européen
des brevets

# EUROPEAN SEARCH REPORT

Application Number

EP 17 19 3564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/172950 A1 (CHEN WANSHI [US] ET AL) 18 June 2015 (2015-06-18) * paragraphs [0006], [0038] - [0040], [0067], [0076] * ----- | 1-10,14, 16,17 | INV. H04B17/318 H04B17/309 B64C39/02 |
| X | HUAWEI ET AL: "Considerations on interference detection for drones", 3GPP DRAFT; R1-1712101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051314921, Retrieved from the Internet: URL:http://www.3gpp.org/ftp/Meetings_3GPP_SYNC/RAN1/Docs/ [retrieved on 2017-08-20] * Section 3 * * figure 2 * ----- -/-- | 1-10,14, 16,17 | |

TECHNICAL FIELDS
SEARCHED (IPC)

H04B
B64C
H04W

The present search report has been drawn up for all claims

| Place of search | Date of completion of the search | Examiner |
|---|---|---|
| The Hague | 23 May 2018 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

Application Number

EP 17 19 3564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA ET AL: "Air-borne UE identification mechanism", 3GPP DRAFT; R2-1708669_AIR-BORNE_UE_IDENTIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318480, Retrieved from the Internet: URL:http://www.3gpp.org/ftp/Meetings_3GPP_SYNC/RAN2/Docs/ [retrieved on 2017-08-20] * Sections 1 and 2.2 * ----- | 1-10,14, 16,17 | |
| L | NOKIA ET AL: "Discussion on non-certified air-borne UE detection", 3GPP DRAFT; R2-1708668_(UPDATE OF R2-1704320)_NON-CERTIFIED_DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Hangzhou, China; 20170515 - 20170519 20 August 2017 (2017-08-20), XP051318479, Retrieved from the Internet: URL:http://www.3gpp.org/ftp/Meetings_3GPP_SYNC/RAN2/Docs/ [retrieved on 2017-08-20] * Section 2, page 3, lines 20-25 * ----- -/-- | 1-10,14, 16,17 | TECHNICAL FIELDS SEARCHED (IPC) |

The present search report has been drawn up for all claims

| Place of search | Date of completion of the search | Examiner |
|---|---|---|
| The Hague | 23 May 2018 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 19 3564

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X <br> A | EP 3 136 798 A1 (LG ELECTRONICS INC [KR]) 1 March 2017 (2017-03-01) <br> * paragraphs [0005], [0070] - [0079] * <br><br> ----- | 11-13,15 <br><br> 1-10,14, 16,17 | |
| A | NTT DOCOMO: "Initial views on potential problems and solutions for aerial vehicles", 3GPP DRAFT; R1-1708433 INITIAL VIEWS ON POTENTIAL PROBLEMS AND SOLUTIONS FOR AERIAL VEHICLES, 3RD GENERATION PARTNERSHIP PROJECT (3GPP), MOBILE COMPETENCE CENTRE ; 650, ROUTE DES LUCIOLES ; F-06921 SO , vol. RAN WG1, no. Hangzhou; 20170515 - 20170519 14 May 2017 (2017-05-14), XP051273626, Retrieved from the Internet: URL:http://www.3gpp.org/ftp/Meetings_3GPP_SYNC/RAN1/Docs/ [retrieved on 2017-05-14] * Section 2.2 * <br><br> ----- | 1-17 | |

TECHNICAL FIELDS SEARCHED (IPC)

The present search report has been drawn up for all claims

| Place of search | Date of completion of the search | Examiner |
|---|---|---|
| The Hague | 23 May 2018 | Ntogari, Georgia |

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 17 19 3564

The Search Division considers that the present European patent application does not comply with the requirements of unity of invention and relates to several inventions or groups of inventions, namely:

1. claims: 1-10, 14, 16, 17

   A base station configured for operating a wireless cell of a wireless communication network, the base station comprising: a wireless interface for communicating with a user equipment; a categorizer configured for providing a categorizing information categorizing the UE as airworthy UE based on a measurement of a signal characteristic between the UE and a plurality of base stations; and a controller for controlling the UE dependent on the categorizing information. (Claim 14)

   ---

2. claims: 11-13, 15

   A base station configured for operating a wireless cell of a wireless communication network, the base station comprising: a controller configured for controlling an associated user equipment so as to vary its minimum transmission power.

   ---

32

## ANNEX TO THE EUROPEAN SEARCH REPORT
## ON EUROPEAN PATENT APPLICATION NO.

EP 17 19 3564

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2018

| Patent document cited in search report | | Publication date | Patent family member(s) | | Publication date |
|---|---|---|---|---|---|
| US 2015172950 | A1 | 18-06-2015 | CN | 105814966 A | 27-07-2016 |
| | | | CN | 105830520 A | 03-08-2016 |
| | | | EP | 3081045 A1 | 19-10-2016 |
| | | | EP | 3081046 A1 | 19-10-2016 |
| | | | JP | 2017503402 A | 26-01-2017 |
| | | | JP | 2017503404 A | 26-01-2017 |
| | | | KR | 20160097223 A | 17-08-2016 |
| | | | KR | 20160097224 A | 17-08-2016 |
| | | | US | 2015172950 A1 | 18-06-2015 |
| | | | US | 2015173056 A1 | 18-06-2015 |
| | | | WO | 2015089282 A1 | 18-06-2015 |
| | | | WO | 2015089292 A1 | 18-06-2015 |
| EP 3136798 | A1 | 01-03-2017 | CN | 106233793 A | 14-12-2016 |
| | | | EP | 3136798 A1 | 01-03-2017 |
| | | | US | 2017188316 A1 | 29-06-2017 |
| | | | WO | 2015163638 A1 | 29-10-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOKIA ; ALCATEL-LUCENT SHANGHAI BELL.** Potential Enhancements for Aerial Vehicles. *3GPP Technical Document-R1-1707198,* May 2017
- **HUAWEI ; HISILICON.** Potential enhancements for drones. *3GPP Technical Document-R1-1707016,* May 2017
- Physical layer procedures. *3GPP TS 36.213,* March 2017
- **NTT DOCOMO.** Initial views on potential problems and solutions for aerial vehicles. *3GPP Technical Document-R1-1708433,* May 2017
- User Equipment (UE) radio transmission and reception. *3GPP TS 36.101,* March 2017
- Radio Frequency system scenarios. *3GPP TS 25.942,* March 2017
- Sequans, Interference Mitigation for Aerial Vehicles. *3GPP Technical Document-R1-1714071,* August 2017
- **QUALCOMM INCORPORATED.** Identification and certification of Aerial Vehicles. *Technical Document-R2-1708238,* August 2017
- Radio Resource Control (RRC) Protocol Specification. *3GPP TS 36.331,* March 2017
- **NORTEL NETWORKS.** Cell selection for very close UEs. *3GPP Technical Document-R2-023000,* November 2002
- Medium Access Control (MAC) protocol specification. *3GPP TS 36.321,* June 2017